# EUROPEAN PATENT APPLICATION

(11) **EP 1 220 348 A2**
(43) Date of publication of application: **03.07.2002**
(21) Application number: 01130690.9
(22) Date of filing: 21.12.2001
(51) Int. Cl.: H01M 10/40

(54) **Non-aqueous electrolyte secondary battery**

(30) Priority: 28.12.2000 JP 2000403176; 06.11.2001 JP 2001340257
(71) Applicant: Japan Storage Battery Co., Ltd., Kyoto-shi, Kyoto 601-8520 (JP)
(72) Inventor: Teshima, Minoru, Japan Storage Battery Co.,Ltd., Kyoto-shi, Kyoto 601-8520 (JP); Tabuchi, Toru, Japan Storage Battery Co.,Ltd., Kyoto-shi, Kyoto 601-8520 (JP)
(74) Representative: Grünecker, Kinkeldey, Stockmair & Schwanhäusser Anwaltssozietät

(57) **Abstract**

The present invention provides a non-aqueous electrolyte secondary battery comprising a positive electrode, a negative electrode comprising a carbonaceous material, an organic electrolyte comprising a lithium salt and a solvent, and a separator. The solvent comprises ethylene carbonate (EC), propylene carbonate (PC), a chain carbonate and phenylethylene carbonate, the content of the chain carbonate, ethylene carbonate (EC) and the propylene carbonate (PC) are from 50 to 90 vol%, from 5 to 45 vol% and from 5 to 45 vol%, respectively, based on the total volume of the ethylene carbonate (EC), the propylene carbonate and the chain carbonate, and the content of the phenylethylene carbonate is from 0.1 to 5.0 wt% based on the total weight of the electrolyte. The non-aqueous electrolyte secondary battery according to the invention exhibits a great discharge capacity, an excellent cycle life performance and an excellent low-temperature discharge performance.

## Description

### FIELD OF THE INVENTION

The present invention relates to a non-aqueous electrolyte secondary battery.

### BACKGROUND OF THE INVENTION

With the recent rapid tendency toward the reduction of size and weight of and diversification of consumers' cellular phone, portable electronic appliances and portable data terminals, it has been keenly desired to develop a secondary battery having a small size and weight and a high energy density which can be repeatedly charged and discharged over an extended period of time as a power supply for these apparatus.

As a secondary battery meeting the foregoing demand, a secondary battery comprising a non-aqueous electrolyte has been put to practical use. This type of a battery has an energy density of several times that of the conventional batteries comprising a water-soluble electrolyte.

An example of this type of a battery is a non-aqueous electrolyte secondary battery comprising, as a positive active material, a lithium-transition metal composite oxide such as lithium-cobalt composite oxide, lithium-nickel composite oxide and lithium-manganese composite oxide and, as a negative active material, an active material such as metallic lithium and lithium alloy capable of absorbing/releasing lithium (e.g., Li-Al alloy) or lithium intercalation compound comprising lithium intercalated in carbon which acts as a host material (The term "host material" as used herein means a material capable of absorbing and releasing lithium ion) and as an electrolyte an aprotic organic solvent having a lithium salt such as LiClO₄, LiPF₆ dissolved therein.

However, the use of an aprotic organic solvent which has heretofore been used as an electrolyte solvent is disadvantageous in that the charge and discharge of the battery is accompanied by the decomposition of the organic electrolyte on the surface of the negative electrode that causes the deterioration of the first charge and discharge efficiency resulting in the drop of discharge capacity or deterioration of cycle life performance. In particular, when the negative electrode is made of a carbonaceous material and the organic electrolyte comprises propylene carbonate (PC), the organic electrolyte undergoes decomposition on the negative electrode during the first charge, bringing forth a great problem of drop of discharge capacity or deterioration of cycle life performance.

As an approach for inhibiting the decomposition of propylene carbonate (PC) on the surface of the carbonaceous material as negative electrode, a process involving the incorporation of ethylene carbonate or vinylene carbonate having phenyl group in the electrolyte was proposed in JP-A-11-354152 (the term "JP-A" as used herein means an unexamined published Japanese patent application). However, the incorporation of these compounds is disadvantageous in that the resulting electrolyte exhibits a lower electrical conductivity that deteriorates discharge performance or low-temperature performance.

### SUMMARY OF THE INVENTION

An object of the present invention is to provide a non-aqueous electrolyte secondary battery which comprises a great discharge capacity, an excellent cycle life performance and an excellent low-temperature discharge performance.

The present invention has been worked out to solve the foregoing problems caused by the incorporation of ethylene carbonate having phenyl group in the electrolyte.

The foregoing object of the invention is accomplished by finding the optimum mixing proportion of solvents for the electrolyte.

The present invention lies in a non-aqueous electrolyte secondary battery comprising a positive electrode, a negative electrode comprising a carbonaceous material, an organic electrolyte comprising a solute and a solvent, and a separator. The solvent comprises ethylene carbonate (EC), propylene carbonate (PC), a chain carbonate and phenylethylene carbonate, the content of the chain carbonate, ethylene carbonate (EC) and the propylene carbonate (PC) are from 50 to 90 vol%, from 5 to 45 vol% and from 5 to 45 wt%, respectively, based on the total volume of the ethylene carbonate (EC), the propylene carbonate and the chain carbonate, and the content of the phenylethylene carbonate is from 0.1 to 5.0 wt% based on the total weight of the electrolyte. In accordance with the invention, the decomposition of the electrolyte accompanying charge and discharge can be inhibited, making it possible to improve the discharge capacity, cycle life performance and low-temperature discharge performance of non-aqueous electrolyte secondary battery.

### BRIEF DESCRIPTION OF THE DRAWINGS

By way of example and to make the description more clear, reference is made to the accompanying drawings in which:

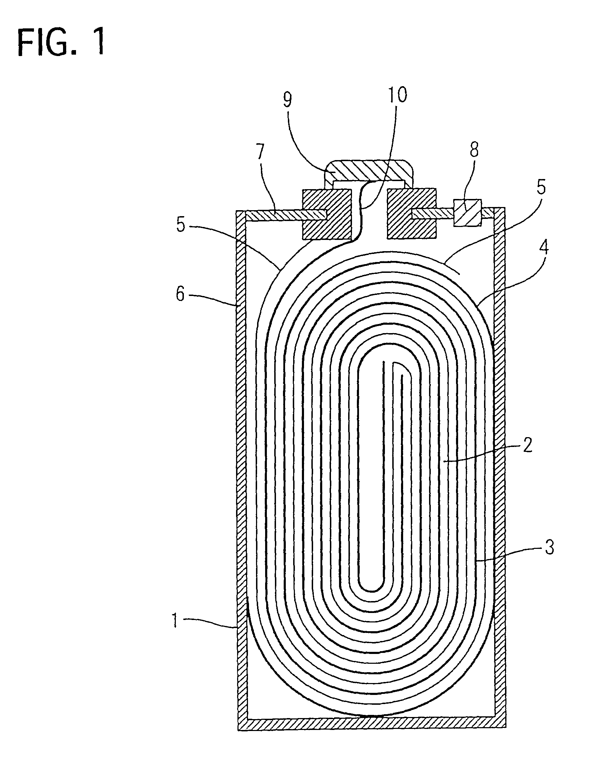

Fig. 1 is a sectional view illustrating an embodiment of the non-aqueous electrolyte secondary battery according to the invention.

### DETAILED DESCRIPTION OF THE INVENTION

An embodiment of implication of the present invention will be described in detail hereinafter.

The present invention lies in a non-aqueous electrolyte secondary battery comprising a negative electrode made of a carbonaceous material capable of absorbing and releasing lithium ion, characterized in that the solvent for the electrolyte comprises ethylene carbonate (EC), propylene carbonate (PC), a chain carbonate and phenylethylene carbonate, the content of the chain carbonate, ethylene carbonate (EC) and propylene carbonate (PC) are from 50 to 90 vol%, from 5 to 45 vol% and from 5 to 45 vol%, respectively, preferably from 60 to 80 vol%, from 15 to 35 vol% and from 5 to 25 vol%, respectively; more preferably from 65 to 75 vol%, from 15 to 25 vol% and from 10 to 20 vol%, respectively; based on the total volume of the ethylene carbonate (EC), propylene carbonate (PC) and chain carbonate. The content of the phenylethylene carbonate is from 0.1 to 5.0 wt%, preferably from 0.2 to 5.0 wt%, particularly from 0.5 to 2.5 wt%, based on the total weight of the electrolyte.

The term "total weight of the electrolyte" as used herein is meant to indicate the total weight of the electrolyte comprising ethylene carbonate (EC), propylene carbonate (PC), a chain carbonate and phenylethylene carbonate.

In accordance with the formulation of the electrolyte solvent of the invention, when the negative electrode is made of a carbonaceous material, an extremely stable protective film is formed on the interface of the electrolyte with the carbonaceous material. The formation of the protective film inhibits the decomposition of the electrolyte. Further, since this protective film is lithium ionically-conductive, the first charge and discharge efficiency can be raised. Thus, a non-aqueous electrolyte secondary battery having a great discharge capacity, an excellent cycle life performance and an improved low-temperature discharge performance can be provided.

In accordance with the invention, the content of phenylethylene carbonate is from 0.1 to 5.0 wt% based on the total weight of the electrolyte. When the content of phenylethylene carbonate falls below 0.1 wt%, there occurs little or no rise of discharge capacity due to the rise of the first charge and discharge efficiency. On the contrary, when the content of phenylethylene carbonate exceeds 5.0 wt%, the resulting electrolyte exhibits a lowered electrical conductivity that deteriorates the high rate discharge performance.

The non-aqueous electrolyte secondary battery of the invention comprises a positive electrode, a negative electrode, a non-aqueous electrolyte, and a separator. As such a non-aqueous electrolyte there may be used one having a light metal salt dissolved in an organic solvent.

The organic solvent to be used in the electrolyte comprises ethylene carbonate (EC), propylene carbonate (PC), a chain carbonate and phenylethylene carbonate as essential components. Among these components, the chain carbonate is not specifically limited. As the chain carbonate there may be used diethyl carbonate, ethylmethyl carbonate, dimethyl carbonate or the like.

The foregoing organic solvent may be used in proper admixture with other organic solvents or in combination with a solid electrolyte. Examples of other organic solvents employable herein include γ-butyrolactone, sulfolane, dimethyl sulfoxide, acetonitrile, dimethylformamide, dimethylacetamide, 1,2-dimethoxyethane, 1,2-diethoxyethane, tetrahydrofuran, 2-methyltetrahydrofuran, dioxolane, and methyl acetate. An inorganic solid electrolyte or solid polymer electrolyte was used as the solid electrolyte.

The light metal salt to be dissolved in the organic solvent is not specifically limited. In practice, however, a lithium salt is preferably used. Examples of the lithium salt employable herein include LiPF₆, LiClO₄, LiBF₄, LiAsF₆, LiCF₃CO₂, LiCF₃(CF₃)₃, LiCF₃(C₃F₅)₃, LiCF₃SO₃, LiN (SO₃CF₃)₃, LiN(SO₃CF₃CF₃), LiN(COCF₃), LiN (COCF₃CF₃)₃, and mixture thereof. The concentration of such a lithium salt is not specifically limited but is preferably from 1.0 to 2.0 M.

The separator to be incorporated in the non-aqueous electrolyte secondary battery according to the invention is not specifically limited. In practice, however, a woven fabric, a nonwoven fabric, a microporous synthetic resin film, etc. may be used. Particularly preferred among these separator materials is microporous synthetic resin film. In particular, a microporous polyolefin film such as microporous polyethylene film, microporous polypropylene film and composite thereof is preferably used from the standpoint of thickness, strength, resistivity, etc.

A solid electrolyte such as polymer electrolyte can be a separator as well. In this case, the solid electrolyte functions as a separator. The solid electrolyte to be used herein is not specifically limited, and a known solid electrolyte may be used. For example, as a polymer electrolyte, there may be used a porous polymer electrolyte film comprising a polymer swollen or wet with an electrolyte and retaining an electrolyte in its pores. In the case where a gel-like solid polymer electrolyte is used, the electrolyte constituting the gel may be different from the electrolyte to be incorporated in the pores. Alternatively, a microporous synthetic resin film may be used in combination with a solid polymer electrolyte, etc.

The positive active material to be incorporated in the non-aqueous electrolyte secondary battery of the invention is not specifically limited. Examples of positive active materials employable herein include transition metal compounds such as manganese dioxide and vanadium pentaoxide, transition metal-chalcogene compounds such as iron sulfide and titanium sulfide, composite oxides of these transition metals with lithium, i.e., LixMO₂ (in which M represents Co, Ni or Mn, and x represents a number of from not smaller than 0.5 to not greater than 1, 0.5 ≤ x ≤ 1), and composite oxides of lithium with nickel, i.e., LiNiₚM1_{q}M2ᵣO₂ (in which M1 and M2 each represent at least one element selected from the group consisting of Al, Mn, Fe, Ni, Co, Cr, Ti and Zn or a non-metallic element such as P and B, and the sum of p, q and r is 1). Particularly preferred among these positive active materials are lithium-cobalt composite oxides and lithium-cobalt-nickel composite oxides because they can provide high voltage and high energy density and an excellent cycle life performance.

The negative electrode to be incorporated in the non-aqueous electrolyte secondary battery is not specifically limited. For example, an alkaline metal such as lithium and sodium or material capable of being doped with or releasing an alkaline metal such as lithium during charge and discharge reaction may be used. Examples of the latter material include an electrically-conductive polymer such as polyacetylene and polypyrrole or carbonaceous material such as coke, polymer charcoal and carbon fiber. Preferred among these materials is carbonaceous material because of its high energy density per unit volume.

In particular, a carbonaceous material capable of absorbing and releasing lithium ion and having an average interplanar placing d (002) of from 0.3354 to 0.34 nm as determined by the X-ray diffractometry is preferably used as a negative electrode. In this arrangement, the capacity and energy density of the battery can be enhanced. The carbonaceous material to be used herein is not specifically limited. Examples of the carbonaceous material employable herein include natural graphite, thermally decomposed carbon, coke (e.g., petroleum coke, pitch coke, coal coke), carbon black (e.g., acetylene black), glassy carbon, sintered organic polymer material (obtained by calcining an organic polymer material at a proper temperature of not lower than 500°C in an inert gas stream or in vacuo), and carbon fiber.

The shape of the battery is not specifically limited. The present invention can be applied to non-aqueous electrolyte secondary batteries in various forms such as prism, ellipse, coin, button and sheet.

The present invention will be further in the following examples, but the present invention should not be construed as being limited thereto.

### EXAMPLE

A prismatic non-aqueous electrolyte secondary battery comprising lithium cobalt oxide as a positive active material and a carbonaceous material as a negative active material was prepared. Fig. 1 is a diagram illustrating the sectional structure of the prismatic non-aqueous electrolyte secondary battery. In Fig. 1, the reference numeral 1 indicates a prismatic non-aqueous electrolyte secondary battery, the reference numeral 2 indicates a spirally coiled electrode block, the reference numeral 3 indicates a positive electrode, the reference numeral 4 indicates a negative electrode, the reference numeral 5 indicates a separator, the reference numeral 6 indicates a battery case, the reference numeral 7 indicates a battery cover, the reference numeral 8 indicates a safety valve, the reference numeral 9 indicates a positive electrode terminal, and the reference numeral 10 indicates a positive electrode lead wire.

The spirally coiled electrode block 2 is received in the battery case 6. The battery case 6 is provided with the safety valve 8. The battery cover 7 and the battery case 6 are laser-welded to each other to seal the battery case 6. The positive electrode terminal 9 is connected to the positive electrode 3 through the positive electrode lead wire 10. The negative electrode 4 comes in contact with the inner wall of the battery case 6 so that they are connected to each other.

The positive electrode was prepared by a process which comprises mixing 90 wt% of LiCoO₂ as an active material, 5 wt% of acetylene black as an electrically conducting material and 5 wt% of a polyvinylidene difluoride as a binder to form a positive electrode compound, dispersing the positive electrode compound in N-methyl-2-pyrrolidone to prepare a paste, uniformly applying the positive electrode paste to an aluminum current collector having a thickness of 20 µm, drying the coated aluminum current collector, and then compression-forming the coated aluminum current collector over roll press.

The negative electrode was prepared by a process which comprises mixing 90 wt% of a carbonaceous material and 10 wt% of a polyvinylidene difluoride as a binder to prepare a negative electrode compound, dispersing the negative electrode compound in N-methyl-2-pyrrolidone to prepare a paste, uniformly applying the negative electrode paste to a copper foil having a thickness of 15 µm, drying the coated copper foil at a temperature of 100°C for 5 hours, and then compression-forming the coated copper foil over roll press.

A microporous polyethylene film having a thickness of about 25 µm was used as the separator.

As the electrolyte solvent, there was used a solvent comprising ethylene carbonate (EC), propylene carbonate (PC), a chain carbonate and phenylethylene carbonate (PhEC) wherein the chain carbonate is methyl ethyl carbonate (MEC), diethyl carbonate (DEC), dimethyl carbonate (DMC) or mixture thereof. The formulation of the electrolyte solvent was varied as set forth in Table 1. As a result, non-aqueous electrolyte secondary batteries of Examples 1 to 35 of the invention were prepared. The content of phenylethylene carbonate (PhEC) was based on the total weight of the electrolyte. LiPF₆ was used as the lithium salt. The concentration of LiPF₆ was 1 M in Examples 1 to 18, 21 to 22, 27, and 29 to 35, 1.2 M in Examples 19, 23, 25 and 26 and 1.5 M in Examples 20, 24 and 28 as set forth in Table 1.

The foregoing constituents were used to prepare a prismatic non-aqueous electrolyte secondary battery having a width of 30 mm, a height of 48 mm and a thickness of 4.15 mm.

### COMPARATIVE EXAMPLES

Non-aqueous electrolyte secondary batteries of Comparative Examples 1 to 6 were prepared in the same manner as in the foregoing examples except that the electrolyte solvent used was free of propylene carbonate (PC) and comprised ethylene carbonate (EC), a chain carbonate and phenylethylene carbon (PhEC) in varied proportions as set forth in Table 2. Further, non-aqueous electrolyte secondary batteries of Comparative Examples 7 to 12 were prepared in the same manner as in the foregoing examples except that the electrolyte solvent used was free of ethylene carbonate (EC) and comprised propylene carbonate (PC), a chain carbonate and phenylethylene carbonate in varied proportions as set forth in Table 2. Moreover, non-aqueous electrolyte secondary batteries of Comparative Examples 13 and 14 were prepared in the same manner as in the foregoing examples except that the electrolyte solvent comprised ethylene carbonate (EC), propylene carbonate (PC), a chain carbonate and phenylethylene carbonate (PhEC) wherein the content of phenylethylene carbonate (PhEC) was 10.0 wt% and 0 wt%, respectively, based on the total weight of the electrolyte as set forth in Table 2. In Comparative Examples 1 to 14, as the electrolyte there was used LiPF₆ in a concentration of 1 M.

The non-aqueous electrolyte secondary batteries of Examples 1 to 35 and Comparative Examples 1 to 14 were each charged with a constant current of 600 mA at a constant voltage to 4.2 V at a temperature of 25°C for 3 hours so that they were fully charged. Subsequently, these batteries were each discharged with a current of 600 mA to 2.75 V. This charge and discharge procedure constitutes one cycle. These batteries were each subjected to 300 charge and discharge cycles. The discharge capacity of these batteries at the 1st cycle and the change of discharge capacity with cycle were examined.

These non-aqueous electrolyte secondary batteries were each charged with a constant current of 600 mA at a constant voltage to 4.2 V at a temperature of 25°C for 3 hours so that they were fully charged. Thereafter, these batteries were each allowed to stand at a temperature of -10°C for 5 hours. These batteries were each discharged with a current of 600 mA to 2.75 V. These batteries were each then examined for low-temperature discharge capacity. The formulations of the electrolytes used in the non-aqueous electrolyte secondary batteries of Examples 1 to 35 are set forth in Table 1 and the results of the measurements of the performance of these batteries are set forth in Table 3. Further, the formulations of the electrolytes used in the non-aqueous electrolyte secondary batteries of Comparative Examples 1 to 14 are set forth in Table 2 and the results of the measurements of the performance of these batteries are set forth in Table 4. In Tables 3 and 4, the initial discharge capacity indicates the discharge capacity at the 1st cycle, and the percent cycle retention indicates the ratio (%) of discharge capacity at the 300th cycle to at the 1st cycle. The values in Tables 3 and 4 were obtained by averaging the values of 10 samples for each battery.

**Table 1**

| Example No. | EC | PC | MEC | DEC | DMC | Concentration (M) of LiPF₆ | PhEC (wt%) |
|---|---|---|---|---|---|---|---|
| 1 | 5 | 5 | 90 | 0 | 0 | 1 | 2.5 |
| 2 | 5 | 5 | 0 | 90 | 0 | 1 | 2.5 |
| 3 | 5 | 5 | 0 | 0 | 90 | 1 | 2.5 |
| 4 | 5 | 45 | 50 | 0 | 0 | 1 | 2.5 |
| 5 | 5 | 45 | 0 | 50 | 0 | 1 | 2.5 |
| 6 | 5 | 45 | 0 | 0 | 50 | 1 | 2.5 |
| 7 | 45 | 5 | 50 | 0 | 0 | 1 | 2.5 |
| 8 | 45 | 5 | 0 | 50 | 0 | 1 | 2.5 |
| 9 | 45 | 5 | 0 | 0 | 50 | 1 | 2.5 |
| 10 | 20 | 20 | 60 | 0 | 0 | 1 | 2.5 |
| 11 | 20 | 20 | 0 | 60 | 0 | 1 | 2.5 |
| 12 | 20 | 20 | 0 | 0 | 60 | 1 | 2.5 |
| 13 | 20 | 20 | 20 | 20 | 20 | 1 | 2.5 |
| 14 | 20 | 20 | 30 | 30 | 0 | 1 | 2.5 |
| 15 | 20 | 20 | 20 | 20 | 20 | 1 | 0.1 |
| 16 | 20 | 20 | 20 | 20 | 20 | 1 | 0.5 |
| 17 | 20 | 10 | 0 | 70 | 0 | 1 | 2.5 |
| 18 | 20 | 10 | 0 | 70 | 0 | 1 | 0.5 |
| 19 | 20 | 10 | 0 | 70 | 0 | 1.2 | 0.5 |
| 20 | 20 | 10 | 0 | 70 | 0 | 1.5 | 0.5 |
| 21 | 20 | 10 | 30 | 40 | 0 | 1 | 2.5 |
| 22 | 20 | 10 | 30 | 40 | 0 | 1 | 0.5 |
| 23 | 20 | 10 | 30 | 40 | 0 | 1.2 | 0.5 |
| 24 | 20 | 10 | 30 | 40 | 0 | 1.5 | 0.5 |
| 25 | 20 | 10 | 30 | 40 | 0 | 1.2 | 1.5 |
| 26 | 20 | 10 | 40 | 30 | 0 | 1.2 | 0.5 |
| 27 | 20 | 20 | 20 | 20 | 20 | 1 | 5.0 |
| 28 | 20 | 20 | 20 | 20 | 20 | 1.5 | 2.5 |
| 29 | 20 | 20 | 20 | 20 | 20 | 1 | 0.2 |
| 30 | 15 | 5 | 40 | 40 | 0 | 1 | 2.5 |
| 31 | 35 | 5 | 0 | 60 | 0 | 1 | 2.5 |
| 32 | 15 | 25 | 0 | 60 | 0 | 1 | 2.5 |
| 33 | 15 | 20 | 0 | 65 | 0 | 1 | 2.5 |
| 34 | 25 | 10 | 0 | 65 | 0 | 1 | 2.5 |
| 35 | 15 | 10 | 0 | 75 | 0 | 1 | 2.5 |

**Table 2**

| Comparative Example No. | EC | PC | MEC | DEC | DMC | Concentration (M) of LiPF₆ | PhEC (wt%) |
|---|---|---|---|---|---|---|---|
| 1 | 10 | 0 | 90 | 0 | 0 | 1 | 2.5 |
| 2 | 10 | 0 | 0 | 90 | 0 | 1 | 2.5 |
| 3 | 10 | 0 | 0 | 0 | 90 | 1 | 2.5 |
| 4 | 50 | 0 | 50 | 0 | 0 | 1 | 2.5 |
| 5 | 50 | 0 | 0 | 50 | 0 | 1 | 2.5 |
| 6 | 50 | 0 | 0 | 0 | 50 | 1 | 2.5 |
| 7 | 0 | 10 | 90 | 0 | 0 | 1 | 2.5 |
| 8 | 0 | 10 | 0 | 90 | 0 | 1 | 2.5 |
| 9 | 0 | 10 | 0 | 0 | 90 | 1 | 2.5 |
| 10 | 0 | 50 | 50 | 0 | 0 | 1 | 2.5 |
| 11 | 0 | 50 | 0 | 50 | 0 | 1 | 2.5 |
| 12 | 0 | 50 | 0 | 0 | 50 | 1 | 2.5 |
| 13 | 20 | 20 | 20 | 20 | 20 | 1 | 10.0 |
| 14 | 20 | 20 | 20 | 20 | 20 | 1 | 0 |

**Table 3**

| Example No. | Initial discharge capacity (mAh) | Discharge capacity at -10°C (mAh) | % Cycle retention |
|---|---|---|---|
| 1 | 602 | 510 | 87.2 |
| 2 | 602 | 462 | 87.6 |
| 3 | 604 | 532 | 87.7 |
| 4 | 581 | 461 | 85.4 |
| 5 | 582 | 421 | 85.6 |
| 6 | 583 | 480 | 85.9 |
| 7 | 601 | 471 | 87.4 |
| 8 | 603 | 423 | 87.0 |
| 9 | 600 | 491 | 87.1 |
| 10 | 600 | 480 | 88.4 |
| 11 | 603 | 440 | 88.6 |
| 12 | 600 | 490 | 88.5 |
| 13 | 600 | 481 | 88.2 |
| 14 | 600 | 475 | 88.4 |
| 15 | 595 | 485 | 81.2 |
| 16 | 598 | 483 | 83.9 |
| 17 | 605 | 431 | 89.4 |
| 18 | 603 | 435 | 90.0 |
| 19 | 600 | 440 | 91.2 |
| 20 | 602 | 442 | 92.0 |
| 21 | 601 | 465 | 88.5 |
| 22 | 601 | 467 | 88.4 |
| 23 | 600 | 468 | 89.0 |
| 24 | 601 | 470 | 88.8 |
| 25 | 602 | 466 | 89.2 |
| 26 | 602 | 481 | 88.3 |
| 27 | 602 | 472 | 85.4 |
| 28 | 600 | 490 | 89.0 |
| 29 | 597 | 484 | 84.0 |
| 30 | 590 | 472 | 83.2 |
| 31 | 598 | 435 | 90.2 |
| 32 | 601 | 437 | 85.5 |
| 33 | 603 | 433 | 87.2 |
| 34 | 600 | 425 | 88.0 |
| 35 | 595 | 430 | 88.2 |

**Table 4**

| Comparative Example No. | Initial discharge capacity (mAh) | Discharge capacity at -10°C (mAh) | % Cycle retention |
|---|---|---|---|
| 1 | 536 | 448 | 83.4 |
| 2 | 537 | 397 | 83.2 |
| 3 | 537 | 470 | 83.6 |
| 4 | 604 | 345 | 65.2 |
| 5 | 605 | 341 | 64.9 |
| 6 | 600 | 360 | 65.4 |
| 7 | 525 | 460 | 78.5 |
| 8 | 527 | 420 | 78.4 |
| 9 | 528 | 493 | 78.6 |
| 10 | 445 | 292 | 60.4 |
| 11 | 440 | 241 | 59.6 |
| 12 | 445 | 262 | 59.8 |
| 13 | 589 | 262 | 46.0 |
| 14 | 587 | 456 | 69.7 |

A prismatic non-aqueous electrolyte secondary battery having a width of 30 mm, a height of 48 mm and a thickness of 4.15 mm is considered to have an excellent performance if it has an initial discharge capacity of not smaller than 580 mAh, a discharge capacity at -10°C of not smaller than 420 mAh (low-temperature discharge performance) and a percent cycle retention of not smaller than 80% (cycle life performance).

As can be seen in the results set forth in Tables 1 to 4, the non-aqueous electrolyte secondary batteries of Examples 1 to 35, the formulation of electrolyte solvent of which falls within the range defined in the invention, are excellent in initial discharge capacity, low-temperature discharge performance and cycle life performance.

In some detail, the non-aqueous electrolyte secondary batteries of Examples 1 to 35 contained an electrolyte solvent comprising four compounds, i.e., ethylene carbonate (EC), propylene carbonate (PC), a chain carbonate and phenylethylene carbonate wherein the content of the chain carbonate, ethylene carbonate (EC) and propylene carbonate (PC) are from 50 to 90 vol%, from 5 to 45 vol% and from 5 to 45 vol%, respectively, based on the total volume of ethylene carbonate (EC), propylene carbonate (PC) and chain carbonate and the content of phenylethylene carbonate is from 0.1 to 5.0 wt% based on the total weight of the electrolyte as set forth in Table 1. In this arrangement, as set forth in Table 3, these batteries exhibited an initial discharge capacity of not smaller than 580 mAh, a discharge capacity at -10°C of not smaller than 420 mAh and a percent cycle retention of not smaller than 80%. Thus, these batteries were excellent all in initial discharge capacity, low-temperature discharge performance and cycle life performance.

On the other hand, the non-aqueous electrolyte secondary batteries of Comparative Examples 1 to 14, the formulation of electrolyte solvent of which deviates from the range defined in the invention, were found to be poor in at least one of initial discharge capacity, low-temperature discharge performance and cycle life performance.

With respect to the non-aqueous electrolyte secondary batteries of Comparative Examples 1 to 6 wherein the electrolyte solvent is free of propylene carbonate (PC), those of Comparative Examples 1 to 3 wherein the electrolyte solvent contains 10 vol% of ethylene carbonate (EC) exhibited an initial discharge capacity of not greater than 540 mAh and those of Comparative Examples 4 to 6 wherein the electrolyte solvent contains 50 vol% of ethylene carbonate (EC) exhibited a discharge capacity at -10°C of not greater than 360 mAh and a percent cycle retention of not greater than 66%.

With respect to the non-aqueous electrolyte secondary batteries of Comparative Examples 7 to 12 wherein the electrolyte solvent is free of ethylene carbonate (EC), those of Comparative Examples 7 to 9 wherein the electrolyte solvent contains 10 vol% of propylene carbonate (PC) exhibited an initial discharge capacity of not greater than 530 mAh and a percent cycle retention of not greater than 79% and those of Comparative Examples 10 to 12 wherein the electrolyte solvent contains 50 vol% of ethylene carbonate (EC) exhibited an initial discharge capacity of not greater than 450 mAh, a discharge capacity at -10°C of not greater than 300 mAh and a percent cycle retention of not greater than 61%.

Further, the non-aqueous electrolyte secondary battery of Comparative Example 13 wherein the electrolyte solvent contains phenylethylene carbonate (PhEC) in an amount of 10.0 wt% based on the total weight of the electrolyte exhibited an initial discharge capacity as high as 589 mAh but exhibited a discharge capacity at -10°C as low as 262 mAh and a percent cycle retention as low as 46.0%. The non-aqueous electrolyte secondary battery of Comparative Example 14 wherein the electrolyte solvent is free of phenylethylene carbonate (PhEC) exhibited an initial discharge capacity as high as 587 mAh and a discharge capacity at -10°C as high as 459 mAh but exhibited a percent cycle retention as low as 69.7%. Thus, these comparative non-aqueous electrolyte secondary batteries were not satisfactory in at least one of the initial discharge capacity, low-temperature discharge capacity and percent cycle retention.

In accordance with the formulation of the electrolyte solvent of the invention, when the negative electrode is made of a carbonaceous material, an extremely stable protective film is formed on the interface of the electrolyte with the carbonaceous material. The formation of the protective film inhibits the decomposition of the electrolyte. Thus, a non-aqueous electrolyte secondary battery excellent in initial discharge capacity, low-temperature discharge performance and cycle life performance can be provided. Accordingly, the present invention has extremely high industrial values.

While the invention has been described in detail and with reference to specific embodiments thereof, it will be apparent to one skilled in the art that various changes and modifications can be made therein without departing from the spirit and scope thereof.

This application is based on Japanese patent applications No. 2000-403176 filed December 28, 2000 and No. 2001-340257 filed November 6, 2001, the entire contents thereof being hereby incorporated by reference.

## Claims

1. A non-aqueous electrolyte secondary battery comprising:
a negative electrode comprising a carbonaceous material;
an organic electrolyte comprising a solute and a solvent; and
a separator,
wherein said solvent comprises ethylene carbonate (EC), propylene carbonate (PC), a chain carbonate and phenylethylene carbonate; the content of said chain carbonate, ethylene carbonate (EC) and said propylene carbonate (PC) are from 50 to 90 vol%, from 5 to 45 vol% and from 5 to 45 vol%, respectively, based on the total volume of said ethylene carbonate (EC), said propylene carbonate and said chain carbonate; and the content of said phenylethylene carbonate is from 0.1 to 5.0 wt% based on the total weight of said electrolyte.

2. The non-aqueous electrolyte secondary battery according to Claim 1, wherein the content of said chain carbonate is 60 to 80 vol% based on the total volume of said ethylene carbonate (EC), said propylene carbonate and said chain carbonate.

3. The non-aqueous electrolyte secondary battery according to Claim 2, wherein the content of said chain carbonate is 65 to 75 vol% based on the total volume of said ethylene carbonate (EC), said propylene carbonate and said chain carbonate.

4. The non-aqueous electrolyte secondary battery according to Claim 1, wherein the content of said ethylene carbonate (EC) is 15 to 35 vol% based on the total volume of said ethylene carbonate (EC), said propylene carbonate and said chain carbonate.

5. The non-aqueous electrolyte secondary battery according to Claim 4, wherein the content of said ethylene carbonate (EC) is 15 to 25 vol% based on the total volume of said ethylene carbonate (EC), said propylene carbonate and said chain carbonate.

6. The non-aqueous electrolyte secondary battery according to Claim 1, wherein the content of said propylene carbonate (PC) is 5 to 25 vol% based on the total volume of said ethylene carbonate (EC), said propylene carbonate and said chain carbonate.

7. The non-aqueous electrolyte secondary battery according to Claim 6, wherein the content of said propylene carbonate (PC) is 10 to 20 vol% based on the total volume of said ethylene carbonate (EC), said propylene carbonate and said chain carbonate.

8. The non-aqueous electrolyte secondary battery according to Claim 1, wherein the content of said phenylethylene carbonate is from 0.2 to 5.0 wt% based on the total weight of said electrolyte.

9. The non-aqueous electrolyte secondary battery according to Claim 8, wherein the content of said phenylethylene carbonate is from 0.5 to 2.5 wt% based on the total weight of said electrolyte.
